# EUROPEAN PATENT APPLICATION

(11) **EP 1 677 510 A1**
(43) Date of publication of application: **05.07.2006**
(21) Application number: 05112945.0
(22) Date of filing: 23.12.2005
(51) Int. Cl.: H04N 1/00

(54) **Progress display for image processing in image processing apparatus**

(30) Priority: 30.12.2004 KR 2004116685
(71) Applicant: Samsung Electronics Co., Ltd., Suwon-si 442-742 Gyeonggi-Do (KR)
(72) Inventor: Yun, Hun-hee, Seoul (KR)
(74) Representative: Walaski, Jan Filip

(57) **Abstract**

An apparatus and method is provided for displaying image data processing progress. The method for displaying image data processing progress comprises scanning an image to generate corresponding image data, restoring the image corresponding to the generated image data, and displaying the restored image. Image data processing progress, such as image scanning progress, image transmitting progress, and image receiving progress, is displayed in real-time, and therefore, a user can know the extent of progress of the image data processing.

## Description

The present invention relates to an apparatus and method for displaying the progress of image data processing. More particularly, the present invention relates to an apparatus and method for displaying the progress of image data processing comprising real-time display having the capability of informing users of processing progress during image data generation, image data transmission, or image data reception.

An image forming apparatus prints or transmits image data generated by itself or received externally. Examples of image forming apparatuses include a copier, a printer, a scanner, a facsimile machine, and a multi-functional peripheral device integrating all of the above.

The main function of an image forming apparatus includes processing image data in addition to printing image data onto paper. 'Image data processing' means i) image data generation processing which generates image data by scanning an image, ii) image data transmission processing which transmits image data to an external facsimile machine, and iii) image data reception processing which receives image data from an external facsimile machine.

When image data processing is completed, the image forming apparatus notifies the user of the completion. In particular, conventional image forming apparatuses display text information on a display element, such as a Liquid Crystal Display (LCD), or output a sound effect to a sound output element, such as a speaker, in order to notify the user of image data processing completion.

Conventional image forming apparatuses notify users only whether image data processing is completed and through the above conventional methods. In other words, users can only know whether the image data processing is completed, or uncompleted (that is, in process), and cannot specifically know the extent of progress of the image data processing.

Accordingly, aspects of the present invention solve at least the above problems and advantages and provide at least the advantages described below. Therefore, an object of the present invention is to provide an apparatus and method for displaying image data processing progress that can provide real-time display of image data processing progress to notify a user of the extent of image data processing.

According to an aspect of the present invention, a method for displaying image data processing progress comprises scanning an image to generate corresponding image data, restoring the image corresponding to the generated image data, and displaying the restored image.

The method can further comprise displaying the extent of image scan progress comprising one of an extent of scan completed and an extent of scan remaining at the present point in time.

Displaying the extent of image scan progress can comprise calculating a part generating time required to scan a part of the image and generate corresponding image data, calculating a remainder generating time required to scan the remainder of the image and generate corresponding image data based on the calculated part generating time, and displaying the calculated remainder generating time.

Displaying the extent of image scan progress can comprise calculating a part scan amount with respect to a scanned portion of the image, calculating a remaining scan amount based on the calculated part scan amount, the remaining scan amount indicating an amount of unscanned image remaining, and displaying at least one of the calculated part scan amount and the remaining scan amount.

The remaining scan amount can be a ratio between an entire amount of image and the amount of unscanned image remaining.

The method can further comprise transmitting image data corresponding to the scanned image, restoring the image corresponding to the transmitted image data, and displaying the restored image.

The method can further comprise displaying the extent of image transmission progress comprising one of an extent of image data transmission completion and an extent of remaining image data to transmit at the present point in time.

The method can further comprise receiving image data corresponding to the image, restoring the image corresponding to the received image data, and displaying the restored image.

The method can further comprise displaying the extent of reception progress comprising one of an extent of image data reception completion and an extent of remaining image data to be received at the present point in time.

According to an aspect of the present invention, an image forming apparatus comprises a scanning part for scanning an image to generate corresponding image data, a display part, and a control part for restoring the image corresponding to the image data generated by the scanning part, and displaying the restored image on the display part.

The control part can be configured to display on the display part one of an extent of scan completion and an extent of remaining image to scan at the present point in time.

The control part can be configured to calculate a part generating time required for the scan part to scan a part of the image and generate corresponding image data, and calculate a remainder generating time required to scan the remainder and restore a corresponding image based on the calculated part generating time, and then display the calculated remainder generating time on the display part.

The control part can be configured to calculate a part scan amount with respect to a scanned portion of the image by the scanning part, calculate a remaining scan amount based on the calculated part scanning amount, the remaining scan amount indicating an amount of unscanned image remaining, and display at least one of the calculated part scan amount and the remaining scan amount.

The apparatus can further comprise a communication interface part for transmitting image data corresponding to the scanned image. The control part can be configured to restore the image corresponding to the image data transmitted by the communication interface part, and display the restored image on the display part.

The control part can be configured to display on the display part one of an extent of image transmission completion and an extent of remaining image to transmit at the present point in time.

The apparatus can further comprise a communication interface part for receiving image data corresponding to the image. The control part can be configured to restore the image corresponding to the image data received by the communication interface part, and display the restored image on the display part.

The control part can be configured to display on the display part the extent of image reception progress comprising one of an extent of image data reception completion and an extent of image data remaining to be received at the present point in time.

The above aspects and exemplary features of the present invention will be more apparent by describing certain exemplary embodiments of the present invention with reference to the accompanying drawings, in which:
Figure 1 is a block diagram of an image forming apparatus according to an exemplary embodiment of the present invention;
Figure 2 is a flowchart for explaining a method for scanning an image according to an exemplary embodiment of the present invention;
Figure 3A is a view of a display part for real-time display of an image corresponding to image data generated by scanning according to an exemplary embodiment of the present invention;
Figure 3B is a view of a display part additionally displaying a remaining time for generating image data according to an exemplary embodiment of the present invention;
Figure 3C is a view of a display part additionally displaying a remaining amount of scanning according to an exemplary embodiment of the present invention; and
Figure 4 is a flowchart for explaining a method for displaying image transmission or reception progress according to another exemplary embodiment of the present invention.

Throughout the drawings, like reference numbers should be understood to refer to like elements, features, and structures.

The matters exemplified in this description are provided to assist in a comprehensive understanding of various exemplary embodiments of the present invention disclosed with reference to the accompanying figures. Accordingly, those of ordinary skill in the art will recognize that various changes and modifications of the exemplary embodiments described herein can be made without departing from the scope and spirit of the claimed invention. Descriptions of well-known functions and constructions are omitted for clarity and conciseness.

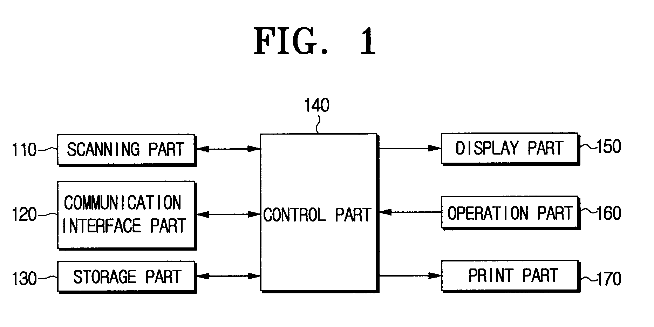

Figure 1 is a block diagram of an image forming apparatus to which a method for displaying image data processing progress is applicable according to an exemplary embodiment of the present invention. 'Image' as used herein comprises picture, text, and a combination of picture and text. 'Image data processing progress' comprises progress relative to scanning an image to generate image data, progress relative to transmitting image data, and progress relative to receiving image data.

Referring to Figure 1, the image forming apparatus comprises a scanning part 110, a communication interface part 120, a storage part 130, a control part 140, a display part 150, an operation part 160, and a print part 170.

The scanning part 110 receives an image for scanning, copying, or faxing to generate scan data. The communication interface part 120 provides an interface for data communication between the image forming apparatus and an external device or a communication network. In particular, the communication interface part 120 provides an interface for data communication through a Public Switched Telephone Network (PSTN), a Local Area Network (LAN), and the Internet.

The storage part 130 comprises a recording medium where the scan data, the facsimile machine data and the print data are stored. The scan data is generated by the scanning part 110, and the facsimile machine data and the print data are received by the communication interface part 120. Hereinafter, the scan data, the facsimile machine data, and the print data are called 'image data.'

The display part 150 comprises a display element for real-time display of the image data processing progress, and in one exemplary embodiment comprises a Liquid Crystal Display (LCD).

The operation part 160 comprises a user interface which receives a user's operation command and then transmits the command to the control part 140, and which is generally implemented as a key pad. The print part 170 prints an image corresponding aforementioned image data onto paper.

The control part 140 provides real-time display on the display part 150 of the image data processing progress of the scanning part 110 and the communication interface part 120. In particular, the control part 140 provides real-time display of the image corresponding to the image data generated by the scanning part 110 on the display part 150 to display in real-time the image data processing progress. The control part 140 provides real-time display on the display part 150 of the image corresponding to the image data transmitted or received by the communication interface part 120 to display in real-time the image data processing progress. The control part 140 can display on the display part 150 additional information regarding the image data processing progress.

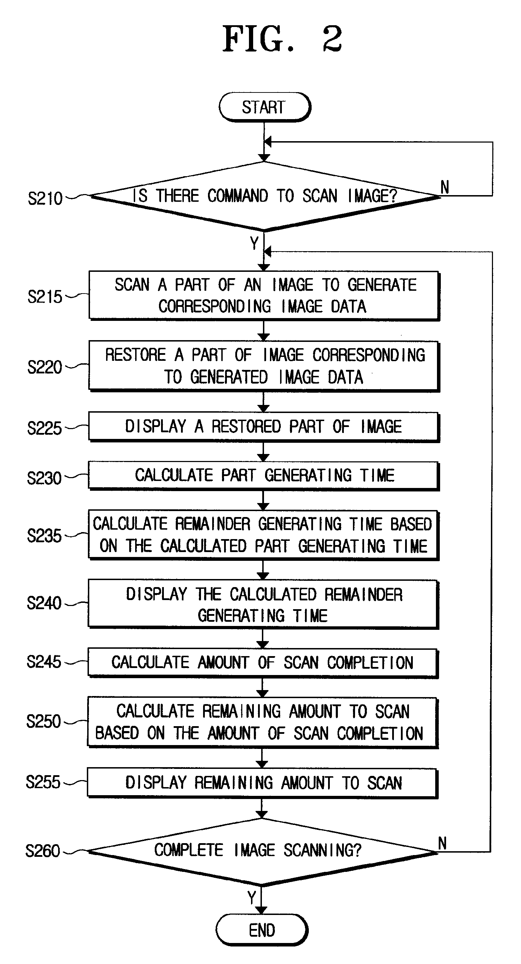

Hereinafter, the method for providing real-time display of the image scanning progress, which comprises progress for scanning an image to generate image data among the plurality of image data processing progress schemes, will be explained in detail with reference to Figure 2. Figure 2 is a flowchart for explaining a method for displaying an image scanning progress in accordance with an exemplary embodiment of the present invention.

If an image scanning command is provided (S210), the scanning part 110 scans a part of an image to generate corresponding image data (S215).

In particular, the image scanning command in step S210 may be provided via the operation part 160 by a user, and the input image scanning command is transmitted via the operation part 160 to the control part 140. Then, the control part 140 controls the scanning part 110 to perform step S215.

The image scanning is also necessary for copying and faxing. Accordingly, as a 'copying command' or 'faxing command' is input, step S215 is also performed. In step S215, there is no inherent limitation to 'a part of an image.' In other words, 'one pixel' among pixels forming an image may be part of the image, and 'one line' among lines forming an image may also be part of the image.

Then, the control part 140 restores a part of the image corresponding to the generated image data (S220), and displays a restored part of the image on display part 150 (S225). The restored part of the image is the same as the scanned part of the image in step S215. Restoring can comprising generating, re-creating or otherwise providing an image corresponding to the generated image data.

The control part 140 calculates a required time for generating a part of image (S230). 'The required time for generating a part of image' is the time necessary for scanning a portion of the image to generate the corresponding image data, that is, for performing step S215.

Then, the control part 140 calculates a required time for generating a remainder based on the calculated required time for generating a part of image (S235), and displays the calculated required time for generating a remainder on the display part 150 (S240). 'The required time for generating a remainder' is the time necessary for scanning the unscanned portion of the image to generate the corresponding image data.

The control part 140 calculates a scanning amount (S245). The 'scanning amount' is the amount required to scan a part of the image, that is, a scanned amount from step S215.

The control part 140 calculates an amount of scanning remainder based on the calculated scanning amount (S250), and displays the calculated remainder scanning amount on the display part 150 (S255). The 'remainder scanning amount' is the amount of scanning required for the unscanned remainder of the image. The remainder scanning amount can be indicated as a ratio between an amount for an entire part of image and an amount for a remainder of unscanned image. The 'remainder scanning amount' can be expressed as a number showing the ratio, or an image such as a progress bar.

The steps of S215 to S255 are continued until completing the image scanning, that is, completing the scanning for entire part of image (S260).

The method for real-time display of image scanning progress has been explained in detail above. Image scanning progress is one of a plurality of image data processing progress schemes embodied by the present invention, and comprises scanning an image to generate image data. In addition, the method for displaying the extent of image scanning completion and the extent of remaining image to scan as the extent of scanning progress has been described in detail above.

The present exemplary embodiment may be implemented by selecting among the information provided for the required time to generate a remainder (steps S230 to S240) and the information provided for the remaining amount to scan (steps S245 to S255). In other words, it may be implemented by selecting one, both, or none of the information provided.

In another exemplary embodiment, information may be provided on scan completion amount instead of the remaining amount to scan. This information may be implemented by allowing the control part 140 to display on the display part 150 the scanning amount calculated from the step of S245. The scanning amount comprises a ratio between the entire amount of image and the amount of the scanned part of the image, and can be implemented as a number or a graphic, such as a progress bar.

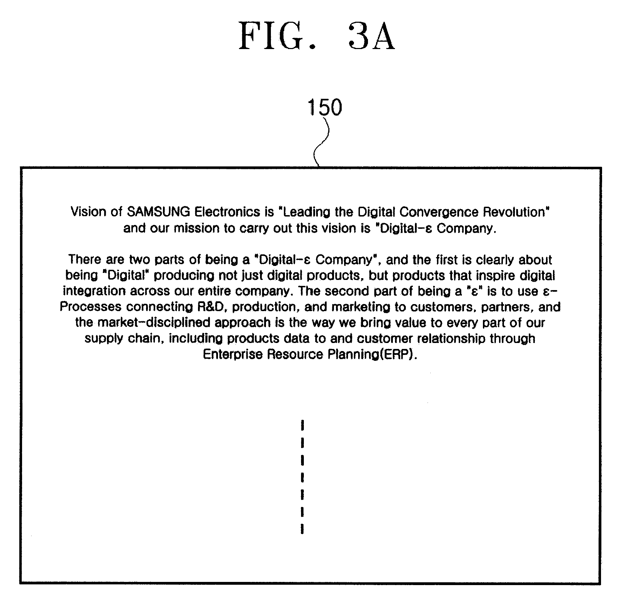

Figure 3A is a view of a display result of the display part 150 according to performing steps S220 and S225. Referring to Figure 3A, an image corresponding to image data generated by scanning is provided in real-time display on the display part 150.

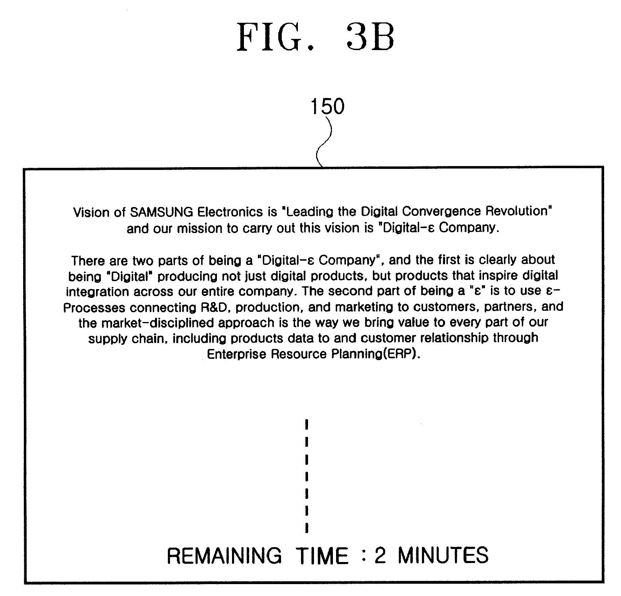

Figure 3B is a view of a display result of the display part 150 according to performing steps S230 to S240. Referring to Figure 3B, the required time to generate the remainder ("remaining time: 2 minutes") is additionally displayed on the display part 150.

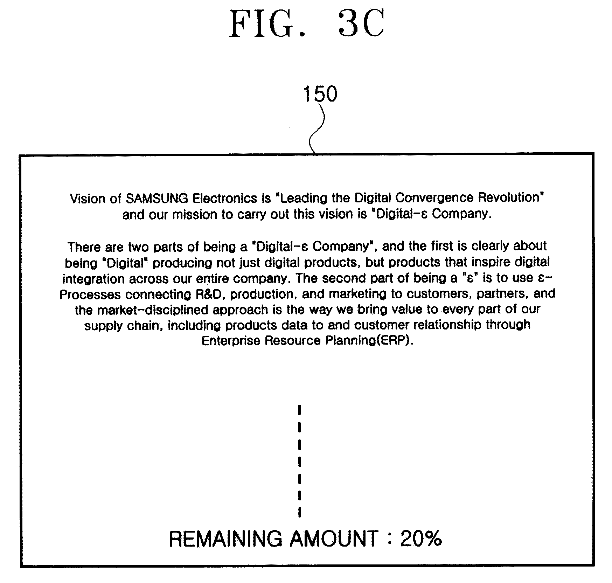

Figure 3C is a view of a display result of the display part 150 according to performing of steps S245 to S255. Referring to Figure 3C, the remaining amount to scan ("remaining amount: 20%") is additionally displayed on the display part 150.

Hereinafter, two of the image data processing progress schemes will be explained in detail as follows: i) method for real-time display of the image transmission progress, and ii) method for real-time display of the image reception progress. The two methods correspond to each other in concept, and are thus similar. Therefore, one drawing is used for explaining the two methods.

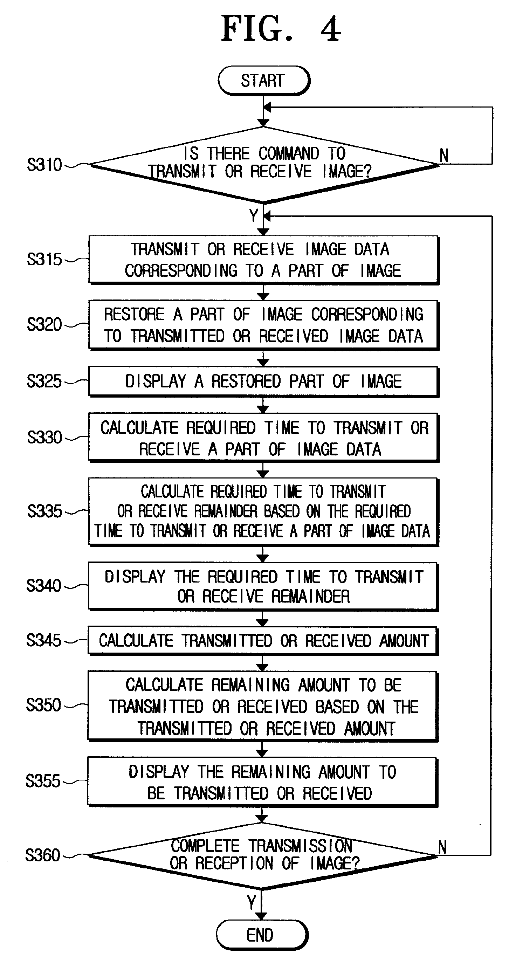

Figure 4 is a flowchart for explaining a method for displaying an image transmission or reception progress according to another exemplary embodiment of the present invention.

If an image transmission or reception command is provided (S310), the communication interface part 120 transmits or receives image data corresponding to a part of the image (S315).

In particular, the image transmission command may be provided through the operation part 160 by a user, and the input image scanning command is transmitted via the operation part 160 to the control part 140. The image reception command is transmitted via the communication interface part 120 from an external device, such as an external facsimile machine, to the control part 140. The control part 140 directs the communication interface part 120 to perform step S315 according to the image transmission or reception command.

In step S315, there is also no limitation as to 'a part of image' as aforementioned in the description of the method for displaying the image scanning progress.

The control part 140 restores the part of image corresponding to the transmitted or received image data (S320), and displays the restored part of the image on the display part 150 (S325).

The control part 140 calculates the time required to transmit or receive the image data part (S330). The 'required time to transmit or receive the part' is the necessary amount of time required for transmitting or receiving image data corresponding to the part of image, that is, for performing step S315.

The control part 140 calculates the time required to transmit or receive the image remainder based on the calculated required time to transmit or receive the image part (S335), and displays the calculated time to transmit or receive the remainder on the display part 150 (S340). The 'required time to transmit or receive the remainder' is the time necessary for transmitting or receiving image data corresponding to the untransmitted or unreceived image remainder.

The control part 140 calculates a transmitting or receiving image amount (S345). The 'transmitting or receiving amount' is an amount with respect to a part of image, that is, a transmitted or received amount from step S315.

The control part 140 calculates an image transmission or reception amount remainder based on the calculated transmitting or receiving amount (S350), and displays the calculated image transmission or reception amount remainder on the display part 150 (S355). The image transmission or reception amount remainder is an amount with respect to an untransmitted or unreceived remainder of the image. The image transmission or reception amount remainder may be indicated as a ratio between the amount for the entire image and the amount for the remainder of the untransmitted or unreceived image. The 'transmission or reception amount of remainder' may be implemented as a number showing the ratio, or a graphic, such as a progress bar as aforementioned in the description of the method for displaying the image scanning progress.

The steps S315 to S355 are continued until completing the image transmission or reception, that is, until completing the transmission or reception of the entire image (S360).

The method for real-time display of the image transmission or reception progress has been explained in detail above. The image transmission or reception progress is one of a plurality of image data processing progress schemes embodied by the present invention, and transmits or receives image data corresponding to an image. In addition, the method for displaying the extent of image transmission or reception progress as the extent of image transmission or reception completion and the extent of the image to transmit or receive has been described in detail above.

The present exemplary embodiment may be implemented by properly selecting among the information provided for the required time to transmit or receive image remainder (steps S330 to S340) and the information provided for the remaining image transmission or reception amount (steps S345 to S355), as aforementioned in the method for displaying the image scanning progress.

In addition, aspects of the present invention can be implemented to provide information on the transmitted or received image amount instead of the remaining image transmission or reception amount as aforementioned in the image scanning progress.

In performing the method for displaying the image transmission or reception progress, the display result of the display part 150 is similar to the aforementioned method for displaying the image scanning progress, and therefore a detailed description thereof will be omitted.

The control part 140 stores image data corresponding to a completely scanned image, and completely transmitted or received image data, to the storage part 130 as a file. Therefore, a user can subsequently use the image data stored in the file at the storage part 130, and can print an image corresponding to image data in the stored file of the storage part 130, or transmit the image data to an external facsimile machine.

The present method for displaying image data processing progress can be applicable to an image forming apparatus which prints image data generated by itself onto paper or transmits the image data to the outside. Additionally, the present method for displaying image data processing progress can be applicable to an image forming apparatus which prints image data received from the outside onto paper. Examples of the image forming apparatus comprise a copier, a printer, a scanner, a facsimile machine, and a multi-functional peripheral device integrating the above.

As described above, if the exemplary embodiments of the present invention are applied, the image data processing progress, such as image scanning progress, image transmitting progress, and image receiving progress, can be provided in a real-time display so as to provide a user with the real-time progress. Therefore, a user can know the specific extent of progress of image data processing, as well as whether the image data processing is completed.

While the present invention has been shown and described with reference to certain exemplary embodiments thereof, it will be understood by those of ordinary skill in the art that various changes in form and detail may be made therein without departing from the scope of the present invention as defined by the appended claims.

## Claims

1. A method for displaying image data processing progress, the method comprising:
scanning an image to generate corresponding image data;
restoring the image corresponding to the generated image data; and
displaying the restored image.

2. The method as claimed in claim 1, further comprising:
displaying an extent of image scan progress comprising one of an extent of scan completed and an extent of scan remaining.

3. The method as claimed in claim 2, wherein displaying the extent of image scan progress comprises:
calculating a part generating time required to scan a part of the image and generate corresponding image data;
calculating a remainder generating time required to scan the remainder of the image and generate corresponding image data based on the calculated part generating time; and
displaying the calculated remainder generating time.

4. The method as claimed in claim 2, wherein displaying the extent of image scan progress comprises:
calculating a part scan amount with respect to a scanned portion of the image;
calculating a remaining scan amount based on the calculated part scan amount, the remaining scan amount indicating an amount of unscanned image remaining; and
displaying at least one of the calculated part scan amount and the remaining scan amount.

5. The method as claimed in claim 4, wherein the remaining scan amount comprises a ratio between an entire amount of the image and the amount of unscanned image remaining.

6. The method as claimed in claim 1, further comprising:
transmitting image data corresponding the scanned image;
restoring the image corresponding to the transmitted image data; and
displaying the restored image.

7. The method as claimed in claim 6, further comprising:
displaying an extent of image transmission progress comprising one of an extent of image data transmission completion and an extent of remaining image data to transmit.

8. The method as claimed in claim 1, further comprising:
receiving image data corresponding to the image;
restoring the image corresponding to the received image data; and
displaying the restored image.

9. The method as claimed in claim 8, further comprising:
displaying an extent of image reception progress comprising one of an extent of image data reception completion and an extent of remaining image data to be received.

10. The method as claimed in claim 1, wherein the generated image data comprises digital data corresponding to a scanned portion of the image.

11. The method as claimed in claim 10, wherein restoring the image comprises aggregation of the digital data into a new image corresponding to the scanned image portion.

12. An image forming apparatus, comprising:
a scanning part for scanning an image to generate corresponding image data;
a display part; and
a control part for restoring the image corresponding to the image data generated by the scanning part, and displaying the restored image on the display part.

13. The apparatus as claimed in claim 12, wherein the control part is configured to display on the display part one of an extent of scan completion and an extent of remaining image to scan.

14. The apparatus as claimed in claim 13, wherein the control part is configured to calculate a part generating time required for the scan part to scan a part of the image and generate corresponding image data, and calculate a remainder generating time required to scan the remainder of the image and restore a corresponding image based on the calculated part generating time, and then display the calculated remainder generating time on the display part.

15. The apparatus as claimed in claim 13, wherein the control part is configured to calculate a part scan amount with respect to a scanned portion of the image, calculates a remaining scan amount based on the calculated part scan amount, the remaining scan amount indicating an amount of unscanned image remaining, and display at least one of the calculated part scan amount and the remaining scan amount.

16. The apparatus as claimed in claim 12, further comprising:
a communication interface part for transmitting image data corresponding to the scanned image,
wherein the control part is configured to restore the image corresponding to the image data transmitted by the communication interface part, and display the restored image on the display part.

17. The apparatus as claimed in claim 16, wherein the control part is configured to display on the display part one of an extent of image transmission completion and an extent of remaining image to transmit.

18. The apparatus as claimed in claim 12, further comprising:
a communication interface part for receiving image data corresponding to the image,
wherein the control part is configured to restore the image corresponding to the image data received by the communication interface part, and display the restored image on the display part.

19. The apparatus as claimed in claim 18, wherein the control part is configured to display on the display part an extent of image reception progress comprising one of an extent of image data reception completion and an extent of image data remaining to be received.

20. A computer program which, when executed on a computer, is operable to perform the method of any one of claims 1 to 11.
